# FASCICULE DE BREVET EUROPEEN

(11) **EP 0 731 149 B1**
(45) Date de publication et mention de la délivrance du brevet: **07.07.1999**
(21) Numéro de dépôt: 96400475.8
(22) Date de dépôt: 06.03.1996
(51) Int. Cl.: C09D 11/00

(54) **Composition d'encre pour le marquage de supports non poreux**
Tinte zur Markierung nicht poröser Substrate
Ink for marking non-porous substrates

(30) Priorité: 08.03.1995 FR 9502701
(43) Date de publication de la demande: 11.09.1996
(73) Titulaire: IMAJE S.A., 26500 Bourg les Valence (FR)
(72) Inventeur: Heraud, Alain, 26000 Valence (FR); De Saint-Romain, Pierre, 26000 Valence (FR)
(74) Mandataire: Dubois-Chabert, Guy

(56) Documents cités:
- EP-A- 0 403 272
- FR-A- 2 317 344
- US-A- 4 465 800
- US-A- 5 376 169

## Description

L'invention concerne une composition d'encre pour le marquage de supports non poreux, en particulier le verre, les plastiques, les métaux ou toute autre surface non poreuse, qui est particulièrement bien adaptée au marquage par jet d'encre, et qui convient tout particulièrement au marquage par la technique du jet continu de bouteilles de verre, notamment de bouteilles de verre qui doivent passer dans une chaîne d'embouteillage.

L'impression par jet d'encre est une technique bien connue, qui permet l'impression, le marquage, ou la décoration de toutes sortes d'objets, à grande vitesse, et sans contact de ces objets avec le dispositif d'impression, de messages variables à volonté tels que codes barre, dates limites de vente etc. et ce même sur des supports non plans.

Les systèmes d'impression par jet d'encre se divisent en deux grands types : "goutte à la demande" (Drop on demand, DOD) ou "jet continu" (CJ). Les ingrédients qui composent les encres pour ces systèmes d'impression sont des produits organiques, des colorants ou des pigments, des résines, dans des solvants plus ou moins volatils ou dans l'eau, d'autres additifs peuvent être incorporés tels que ceux qui sont nécessaires pour communiquer à l'encre la conductivité requise à la déviation électrostatique dans la technique du jet continu.

Les compositions d'encre applicables par les techniques de "goutte à la demande", à savoir d'une part par des systèmes de type piézoélectrique utilisant la déformation d'une céramique piézoélectrique sous l'effet d'une tension électrique pour aspirer et projeter l'encre, d'autre part par des systèmes "jet à bulle", sont pour la plupart à base d'eau. En effet, l'utilisation de l'eau permet de mettre en oeuvre les colorants solubles à l'eau qui sont les plus répandus. D'autres raisons de l'utilisation de l'eau comme milieu solvant de ces encres sont son prix, son absence de toxicité ainsi que sa faible volatilité. La faiblesse inhérente de toutes ces encres à base d'eau est la sensibilité à l'eau des marquages obtenus. On a donc cherché à améliorer les résistances à l'eau des encres utilisées dans la technique dite de "goutte à la demande" en mettant en oeuvre des colorants spécifiques et des combinaisons particulières.

Ainsi, le document FR-A-2 305 479 décrit une encre pour imprimante à jet d'encre à base d'eau dans laquelle le colorant est dissous dans un solvant non miscible à l'eau avec addition d'un agent complexant comprenant un sel d'acide gras à longue chaîne et un agent mouillant (arylsulfonate de sodium) moyennant quoi une phase unique est obtenue. L'encre séchée est insensible à l'eau selon le test du frottement humide.

Du fait que les encres utilisées dans les systèmes du type "goutte à la demande" doivent présenter une faible vitesse d'évaporation pour éviter le colmatage des buses, leur application est en fait limitée aux supports poreux dans lesquels l'encre pénètre et peut sécher par absorption, ce qui n'est pas le cas des surfaces non poreuses.

Les systèmes d'impression du type à "jet continu" mettent en oeuvre rarement des encres à base d'eau, car cette technologie se prête mieux aux marquages à très grande vitesse pour lesquels une grande vitesse d'évaporation est nécessaire. Ces encres sont donc en grande majorité des encres à base de solvants organiques : alcools et cétones en particulier. Les encres mises en oeuvre dans les systèmes à jet continu dévié présentent une bonne tenue sur toutes sortes de supports à marquer non poreux.

De façon classique, ce type d'encre contient :
- un solvant ou un mélange de solvants, le solvant majoritaire étant très volatil et peu visqueux : tel que les alcools, cétones et esters de faible masse moléculaire qui permettent d'ajuster la viscosité à une valeur de 2 à 10 mPa.s.

Des solvants minoritaires plus visqueux et moins volatils tels que les éthers de glycols peuvent être ajoutés pour améliorer le séchage de l'encre sur le support, de l'eau peut parfois être ajoutée à ces formulations mais toujours en faibles proportions ;
- un ou plusieurs liants aussi appelés résines qui permettent d'assurer l'adhérence de l'encre sur les supports visés, en particulier sur les supports non poreux. La nature de ces liants, spécifique à chaque catégorie de support, apporte de plus à l'encre l'essentiel de ses propriétés de résistance aux agressions physiques et/ou chimiques ;
- un ou plusieurs colorants et/ou pigments pour donner à l'encre sa couleur, ou bien encore des propriétés optiques particulières telles que la fluorescence ;
- éventuellement un sel "de conductivité" dans le cas de la technique d'impression par jet continu;

Le liant est donc le constituant essentiel de l'encre permettant d'assurer sa tenue et sa résistance sur le substrat particulier correspondant à l'application voulue. A chaque application correspond donc un liant particulier.

Ainsi le document US-A-4 465 800 décrit une encre pour imprimante à jet d'encre comprenant en tant que liant une résine filmogène de type résol-phénolique, un solvant de type alcool inférieur et une résine modifiante, par exemple une résine époxy, susceptible de réagir par réticulation avec la résine ci-dessus.

Ces encres présentent une excellent adhésion et une excellente résistance démontrées par des tests sur divers supports non poreux.

Le document US-A-4 168 254 est relatif à une encre ayant d'excellentes propriétés d'adhésion et de résistance au vieillissement et à l'abrasion sur divers substrats non poreux tels que les bouteilles de verre, les polymères synthétiques, le métal, et comprenant comme constituant essentiel favorisant l'adhésion une résine époxy phénolique choisie en particulier parmi les éthers polyglycidyliques du bisphénol A de bas poids moléculaire et de faible viscosité.

Le solvant est à base d'alcools et de cétones.

Le document US-A-5 270 368 concerne une composition d'encre durcissable par U.V. pour impression par jet d'encre, en particulier sur des circuits imprimés et qui présente d'excellentes propriétés d'adhésion sur divers supports non poreux après exposition à la lumière U.V. Cette encre comprend comme constituants essentiels :
- un monomère ou dimère filmogène d'époxyacrylate qui est responsable des excellentes propriétés d'adhésion sur support métallique et de résistance aux attaques chimiques. Le composé préféré est l'époxydiacrylate de bisphénol A,
- un acrylate ayant un groupement carboxyle pendant qui permet à l'encre durcie d'être éliminée du circuit imprimé par les solutions basiques,
- diverses résines acryliques ayant pour effet de favoriser l'adhésion, d'augmenter la résistance aux agressions chimiques, de diminuer la viscosité, d'accroître la vitesse de durcissement, d'améliorer la réticulation et d'améliorer la résistance à l'abrasion,
- un agent d'initiation de la polymérisation par U.V.

Le document EP-A-0 071 345 a trait à une composition d'encre pour impression par jet d'encre qui donne après durcissement par exposition aux U.V. des marquages adhérents et résistants, en particulier sur des bouteilles en verre.

Cette encre comprend obligatoirement un agent d'initiation de la polymérisation par les U.V., et comme agent liant au moins une résine époxy "prépolymère" de faible masse moléculaire (inférieure à 300) choisie en particulier parmi les éthers diglycidyliques de bisphénol A, les novolaques époxydées qui permet d'améliorer l'adhésion de l'encre soumise à l'action de l'eau, ou de l'eau savonneuse, etc. D'autres résines acryliques ou vinyliques peuvent également être incorporées pour donner une meilleure adhésion sur le support.

Le document EP-A-0 466 345 concerne une composition d'encre pour impression par jet sans solvant organique qui comporte une dispersion aqueuse d'une résine vinylique, ou phénolique ou époxy et un colorant.

Cette composition peut être durcie ou non et présente d'excellentes adhésions et résistances sur des substrats non poreux tels que le verre.

Le document FR-A-2 317 344 est relatif à des compositions d'encre pour impression sur verre comportant comme seul liant une résine novolaque.

Le document GB-A-1 595 453 est relatif à des compositions d'encre convenant particulièrement pour l'impression sur des substrats polymériques en particulier en polyoléfines. Les encres comprennent :
- un liant dont les constituants principaux sont un copolymère à groupements carboxyles, par exemple un copolymère de l'acide acrylique ou méthacrylique avec par exemple des monomères vinyliques tels que le styrène, ou des esters acryliques ou méthacryliques ; une résine époxy qui n'est pas spécifique ; et un agent réticulant/durcissant qui est un aminoalkyle-alcoxy-silane,
- un solvant,
- un pigment ou colorant.

Le durcissement a lieu à température ambiante et nécessite un stockage prolongé du substrat marqué pour obtenir enfin une bonne adhésion et une bonne résistance, en particulier au frottement humide.

De plus, l'encre, du fait de la réactivité des trois constituants du liant, ne peut être conservée pendant plus de quelques heures et doit en pratique être stockée sous la forme de deux récipients séparés, l'un d'entre eux contenant l'agent durcissant, l'encre doit être préparée par mélange immédiatement avant son utilisation.

Les encres formulées selon l'art antérieur et qui contiennent donc des liants de type résol, de type époxy-phénolique, des liants vinyliques ou phénoliques employés seuls s'avèrent cependant présenter une tenue et une résistance que l'on peut considérer comme insuffisantes sur les supports non poreux tels que verres, métaux et plastiques lorsque les marquages sont soumis à l'action répétée de l'eau, des détergents, bactéricides, agents nettoyants utilisés notamment dans les chaînes d'embouteillage. Une excellente adhérence et une excellente résistance aux agressions chimiques peuvent être obtenues, dans certaines encres après durcissement par U.V., mais cela nécessite l'incorporation dans la composition d'un agent initiateur de la polymérisation par U.V. et l'éclairement de l'encre après projection par une source d'U.V.

Dans d'autres encres, de bonnes adhérences et résistances sont la conséquence de l'incorporation dans le liant de l'encre d'un agent durcissant/réticulant qui doit être conservé séparément et qui est ajouté aux autres constituants immédiatement avant l'impression.

Sans vouloir être liée par une théorie, la fonction du liant est de procurer l'adhérence sur la surface, qui est obtenue par les interactions existant entre, d'une part les fonctions polaires donnant aux surfaces notamment de verre ou de céramique, des caractéristiques hautement hydrophiles et d'autre part les fonctions polaires hydrophiles du liant de l'encre. Toutefois, lorsqu'un tel marquage est ensuite soumis à l'action de l'eau et des autres agents de nettoyage ou de stérilisation tels que l'hypochlorite de sodium, à température ambiante ou à basse température, l'eau a tendance à déplacer l'encre sous l'effet de la création de nouvelles interactions fortes avec la surface et l'encre se décolle du support. Ce phénomène est encore accru à basse température, ce qui est en particulier le cas lorsque des bouteilles de verre marquées sont immergées dans l'eau très froide (température comprise entre 0 et 4°C) ou placées au réfrigérateur. D'autre part, ces excellentes propriétés d'adhésion et de résistance aux agressions chimiques doivent être obtenues sans que ne soient affectées les propriétés habituellement requises des encres utilisées pour les imprimantes à jet d'encre, et en particulier des encres pour les imprimantes utilisant la technique du jet continu : viscosité, résistivité, etc. L'encre doit, de plus, pour permettre le marquage à grande vitesse, présenter une vitesse de séchage aussi grande que possible.

L'objet de cette invention est donc de permettre le marquage rapide, en particulier par la technique du jet d'encre, d'objets dont la surface n'est pas poreuse, de préférence le marquage d'objets en verre, en plastique ou en métal, tout en assurant la permanence de ce marquage lors des traitements ultérieurs du support par des produits aqueux : bactéricides, stérilisants, détergents, et autres... que ce soit à température ambiante ou à froid sans avoir recours à un durcissement par U.V. de l'encre projetée. Cet objectif est réalisé, conformément à l'invention, par une composition d'encre, exempte d'agents initiateurs de polymérisation par U.V. et comprenant au moins :
- un solvant organique,
- un colorant et/ou un pigment,
- et un liant
caractérisée en ce que le liant comprend la combinaison d'au moins une résine polymère à fonctions hydroxyles ou carboxyles choisie parmi les résines vinyliques et les résines acryliques et d'une résine liquide polymère hydrophobe de type époxy ayant un effet plastifiant.

Par rapport aux encres de l'art antérieur, mentionnées ci-dessus et qui ne comportent en général qu'un seul liant, l'incorporation dans les liants des encres selon l'invention d'une résine polymère hydrophobe spécifique de type époxy, ayant un effet plastifiant, permet une meilleure adhérence de l'encre sur les supports non poreux et une excellente résistance aux agressions chimiques. De ce fait, les compositions d'encre selon l'invention trouvent particulièrement leur application dans le marquage de bouteilles de verre, notamment à la fabrication des bouteilles, mais aussi dans des chaînes d'embouteillage dans lesquelles il est nécessaire de marquer les bouteilles avant leur remplissage. La résine polymère à fonctions hydroxyle a de préférence un indice d'hydroxyle compris entre 30 et 100, et peut de préférence être choisie parmi les résines vinyliques à fonction hydroxyle par exemple certains copolymères du chlorure de vinyle, de l'acétate de vinyle tels que les Vinylite® de Union Carbide.

La résine polymère à fonctions carboxyle a de préférence un indice d'acide compris entre 40 et 300 et elle est choisie de préférence parmi les résines acryliques à fonctions acides par exemple les polymères et copolymères de monomères acryliques entre eux ou avec d'autres monomères éthylèniquement insaturés tels que le styrène.

La résine liquide polymère hydrophobe de type résine époxy ayant un effet plastifiant a de préférence un taux d'époxy compris entre 1000 et 6000 mmole/kg ; et elle est choisie de préférence parmi les résines de type liquide de faible viscosité, par exemple voisine de 1 Pa.s. La résine b) est choisie par exemple parmi les résines de type époxy bisphénol modifiées ou non. Il a été constaté que la combinaison d'une résine polymère à fonctions carboxyle et d'une résine polymère hydrophobe spécifique de type époxy ayant un effet plastifiant permet de manière surprenante d'obtenir de plus des marquages sur support non poreux tels que des bouteilles de verre qui présentent une excellente adhésion et une excellente résistance lorsqu'ils sont soumis à l'action de l'eau ou d'autres agents aqueux non seulement à température ambiante, mais aussi à basse température (inférieure à 10°C) : c'est notamment le cas lorsque les bouteilles de verre sont immergées dans l'eau froide (par exemple entre 0 et 4°C) ou placées au réfrigérateur et soumises à la condensation. Une telle encre comprenant comme liant la combinaison d'une résine (par exemple acrylique) à fonctions acides et de la résine époxy hydrophobe à effet plastifiant présente encore l'avantage supplémentaire d'être soluble dans les alcalis qui sont utilisés pour le nettoyage des bouteilles de verre recyclé. Le rapport massique de la résine à fonctions carboxyle ou hydroxyle à la résine époxy est de préférence compris entre 20/80 et 80/20. Les résines sont présentes en une quantité suffisante pour obtenir une viscosité convenable de l'ensemble de la formulation, de préférence entre 2 et 10 mPa.s.

Les solvants utilisables sont ceux pour lesquels la solubilité des colorants et des résines est suffisante, par exemple les alcools, les esters, les cétones, les hydrocarbures aromatiques, de préférence les alcools inférieurs, les esters légers, les cétones volatiles, pris seuls ou en mélange qui permettent de satisfaire aux besoins de vitesse d'impression élevées. Le solvant sera donc choisi de préférence parmi les composés suivants pris seuls ou en mélange : les alcools aliphatiques de 1 à 10 atomes de carbone, les cétones de 3 à 10 atomes de carbone, les hydrocarbures aromatiques, les esters aliphatiques (C1 à C5) d'acides carboxyliques en C2-C5 ; par exemple, le méthanol, l'éthanol, le propanol, l'isopropanol, le n-butanol, l'acétone, la diméthyl-cétone, la méthyl-éthyl-cétone, la méthyl-propyl-cétone, la méthyl-isobutyl-cétone, l'éthyl-propyl-cétone, la cyclopentanone, la cyclohexanone, les acétates d' alkyle, le benzène, le toluène, le xylène et tous les autres solvants volatils à température ambiante éventuellement additionnés d'un ou de plusieurs solvants moins volatils permettant de retarder le séchage et donc permettant la bonne formation du film d'encre, par exemple les éthers de l'éthylène glycol, des mono di- et tri propylène glycol, et leurs esters. Un solvant préféré est la méthyl-éthyl-cétone.

D'autres résines en plus des résines mentionnées ci-dessous peuvent être incorporées dans les compositions d'encre selon l'invention pour en améliorer certaines propriétés : les résines cétoniques, ou aldéhydiques, les dérivés de la colophane et la colophane pris seuls ou en mélange.

Les produits apportant à l'encre la conductivité nécessaire à la projection par jet continu dévié sont des composés ionisables tels que les sels de métaux alcalins, alcalino-terreux ou d'ammonium simple ou quaternaire, sous forme d'halogénures, de perchlorates, de nitrates, thiocyanates, acétates, sulfates, propionates, etc.

Le sel de conductivité est présent en quantité suffisante pour donner à l'ensemble de la formulation une conductivité de préférence supérieure à 200 µs/cm.

Les colorants utilisés sont les colorants de type colorants solvants : "Solvent dyes", les colorants basiques "basic dyes" (selon les catégories du "colour Index Guide") ou les pigments dans la mesure où ils peuvent être obtenus sous forme suffisamment stable et finement dispersés. La composition comprend de préférence de 0,5 à 10 % en masse de colorant et/ou de pigment.

L'encre peut également comprendre un additif choisi parmi : un agent anti-moussant, un stabilisant chimique, un stabilisant U.V. pris seuls ou en combinaison.

L'invention a également pour objet un procédé de marquage d'objets, en particulier d'objets non poreux par projection sur des objets d'une composition d'encre telle qu'elle a été décrite ci-dessus. Le marquage peut notamment s'effectuer par la technique du jet continu.

L'invention a encore pour objet un substrat, en particulier un substrat ou support non poreux pourvu d'un marquage comprenant la composition d'encre telle que décrite ci-dessus. Ce substrat non poreux peut être en métal, par exemple en aluminium, en acier (boîtes de boissons), en verre (bouteilles de verre), en bois, en céramique, en papier glacé, en polymère synthétique ("plastiques") tels que PVC, PET, polyéthylène, en "Plexiglas", ou en toute autre substance non poreuse.

L'invention sera mieux comprise à la lecture de la description suivante d'exemples de réalisation de l'invention donnés à titre d'exemple illustratif et non limitatif.

### EXEMPLES :

Les compositions d'encre suivantes ont été préparées en mélangeant les produits cités dans le tableau 1 ci-dessous.

Tous les pourcentages sont des pourcentages en masse, sauf indication contraire.

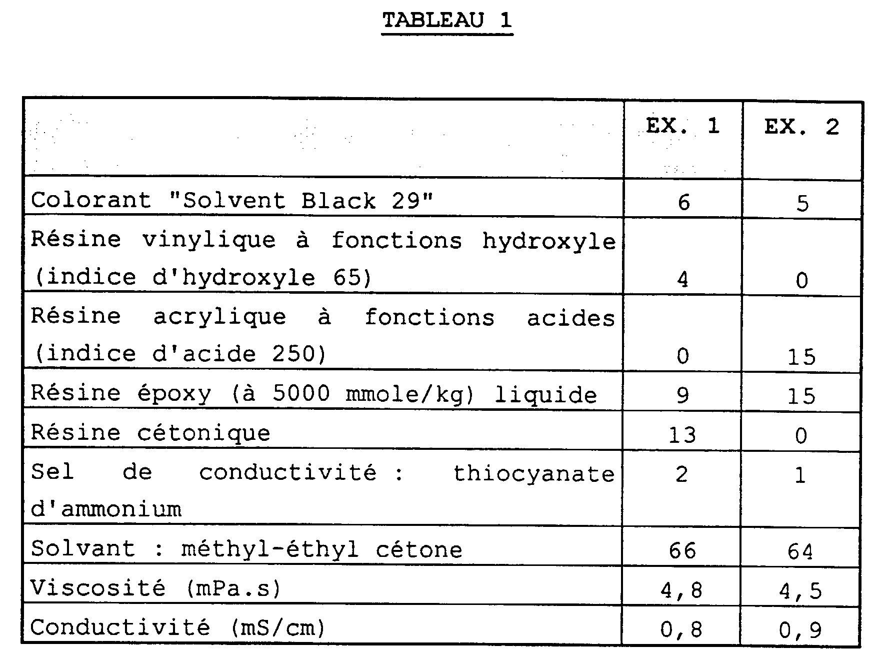

Les deux compositions d'encre ainsi préparées ont été testées dans des imprimantes à jet continu et permettent d'obtenir des impressions d'excellente qualité.

### Exemple 1 :

Le marquage par jet de cette formulation sur des bouteilles de verre est particulièrement résistant à l'abrasion humide évalué par frottement au doigt de la surface, après immersion dans l'eau ou dans des solutions de détergents à pH basique de l'ordre de 10. Dans les mêmes conditions, des encres formulées selon des principes différents et recommandées pour leur tenue sur verre, à savoir d'une part une encre de la Société IMAJE référencée 5119, d'autre part une encore de la Société VIDEOJET référencée 16-8600Q ne tiennent pas.

### Exemple 2 :

Le marquage par jet de cette formulation sur des bouteilles de verre est particulièrement résistant à l'abrasion humide évalué par frottement au doigt de la surface, après immersion dans l'eau très froide (0 à 4°C) ou mise au réfrigérateur. De plus, cette encre est soluble dans des alcalis, aussi dilués que la soude ou la potasse entre 0,5 et 3 % dans l'eau utilisés pour le nettoyage des bouteilles de verre recyclé. Dans les mêmes conditions, des encres formulées selon des principes différents et recommandées pour leur tenue sur verre et alcali solubles, à savoir d'une part une encre à base de résine acrylique sans plastification par une résine époxy, d'autre part une encre de la Société VIDEOJET référencée 16-8200 ne tiennent pas.

## Revendications

1. Composition d'encre pour le marquage d'objets, exempte d'agents initiateurs de polymérisation par U.V., qui comprend au moins :
- un colorant et/ou un pigment,
- un solvant organique,
- et un liant
caractérisée en ce que le liant comprend la combinaison d'au moins :
a) une résine polymère à fonctions hydroxyle ou carboxyle choisie parmi les résines vinyliques et les résines acryliques, et
b) d'une résine liquide polymère hydrophobe de type époxy ayant un effet plastifiant.

2. Composition d'encre selon la revendication 1, caractérisée en ce que le liant comprend en outre une autre résine différente des résines a) et b).

3. Composition d'encre selon la revendication 1, caractérisée en ce qu'elle comprend en outre un sel de conductivité.

4. Composition d'encre selon la revendication 1, caractérisée en ce qu'elle comprend un additif choisi parmi : un agent anti-moussant, un stabilisant chimique, un stabilisant U.V., pris seuls ou en combinaison.

5. Composition d'encre selon la revendication 1, caractérisée en ce que le colorant est choisi parmi les colorants solvants : "Solvent dyes", les pigments et les colorants basiques "Basic dyes".

6. Composition d'encre selon la revendication 1, caractérisée en ce que le solvant organique est choisi parmi les alcools, les cétones, les esters et les hydrocarbures aromatiques pris seuls ou en mélange éventuellement additionnés d'un ou de plusieurs solvants moins volatils.

7. Composition d'encre selon la revendication 1, caractérisée en ce que la résine polymère a) est une résine à fonctions hydroxyle qui a un indice d'hydroxyle de 30 à 100.

8. Composition d'encre selon la revendication 1, caractérisée en ce que la résine polymère a) est une résine à fonctions carboxyles qui a un indice d'acide compris entre 40 et 300.

9. Composition d'encre selon la revendication 1, caractérisée en ce que la résine b) est une résine de type époxy ayant un taux d'époxy compris entre 1000 et 6000 mmole/kg.

10. Composition d'encre selon la revendication 2, caractérisée en ce que la résine additionnelle est choisie parmi les résines cétoniques, les résines aldéhydiques, la colophane et les dérivés de la colophane pris seuls ou en mélange.

11. Composition d'encre selon la revendication 3, caractérisée en ce que le sel de conductivité est choisi parmi les halogénures, perchlorates, nitrates, thiocyanates, acétates, propionates, sulfates de métaux alcalins ou alcalino-terreux ou d'ammonium simple ou quaternaire.

12. Composition d'encre selon la revendication 6, caractérisée en ce que le solvant est la méthyl-éthyl cétone.

13. Composition d'encre selon la revendication 1, caractérisée en ce que la résine a) est choisie parmi les copolymères du chlorure de vinyle et de l'acétate de vinyle.

14. Composition d'encre selon la revendication 1, caractérisée en ce que la résine a) est choisie parmi les polymères ou copolymères acryliques entre eux ou avec d'autres monomères éthyléniquement insaturés.

15. Composition d'encre selon la revendication 9, caractérisé en ce que la résine b) est choisie parmi les résines de type époxy-Bisphénol modifiées ou non.

16. Composition selon la revendication 1, caractérisée en ce que le rapport massique de la résine à fonctions hydroxyle ou carboxyle à la résine époxy est compris entre 20/80 et 80/20.

17. Composition selon la revendication 1, caractérisée en ce qu'elle comprend de 0,5 à 10 % en masse de colorant et/ou de pigment.

18. Procédé de marquage d'objets, en particulier d'objets non poreux par projection sur ces objets d'une encre, caractérisé en ce que l'encre projetée est une composition d'encre selon l'une quelconque des revendications 1 à 17.

19. Procédé selon la revendication 18, caractérisé en ce que le marquage est effectué par la technique du jet continu.

20. Substrat, en particulier substrat non poreux, caractérisé en ce qu'il est pourvu d'un marquage comprenant la composition d'encre selon l'une quelconque des revendications 1 à 17.

21. Substrat selon la revendication 20, caractérisé en ce que le substrat est du métal, de la matière plastique, du papier, de la céramique, du Plexiglas, du bois ou tout autre matériau non poreux.

22. Substrat selon la revendication 21, caractérisé en ce qu'il est constitué d'une bouteille en verre.

## Claims

1. Ink composition for the marking of objects, free from UV polymerization initiating agent and comprising at least one dye and/or a pigment, an organic solvent and a binder, characterized in that the binder comprises the combination of at least a:
a) polymeric resin having hydroxyl or carboxyl functions and chosen from among vinyl resins and acrylic resins and
b) hydrophobic polymeric liquid resin of the epoxy type having a plasticizing effect.

2. Ink composition according to claim 1, characterized in that the binder also comprises another resin different from resins a) and b).

3. Ink composition according to claim 1, characterized in that it also comprises a conductivity salt.

4. Ink composition according to claim 1, characterized in that it comprises an additive chosen from among an antifoaming agent, a chemical stabilizer and a UV stabilizer, considered singly or in combination.

5. Ink composition according to claim 1, characterized in that the dye is chosen from among solvent dyes, pigments and basic dyes.

6. Ink composition according to claim 1, characterized in that the organic solvent is chosen from among alcohols, ketones, esters and aromatic hydrocarbons, considered singly or in combination and to which have optionally been added one or more less volatile solvents.

7. Ink composition according to claim 1, characterized in that the polymeric a) is a resin having hydroxyl functions with a hydroxyl number from 30 to 100.

8. Ink composition according to claim 1, characterized in that the polymeric resin a) is a resin having carboxyl functions with an acid number between 40 and 300.

9. Ink composition according to claim 1, characterized in that the resin b) is of the epoxy type having an epoxy proportion between 1000 and 6000 mmole/kg.

10. Ink composition according to claim 2, characterized in that the additional resin is chosen from among ketone resins, aldehyde resins, colophony and colophony derivatives, considered singly or in combination.

11. Ink composition according to claim 3, characterized in that the conductivity salt is chosen from among halides, perchlorates, nitrates, thiocyanates, acetates, propionates and sulphates of single or quaternary ammonium, alkaline earth metals or alkali metals.

12. Ink composition according to claim 6, characterized in that the solvent is methyl ethyl ketone.

13. Ink composition according to claim 1, characterized in that the resin a) is chosen from among copolymers of vinyl chloride and vinyl acetate.

14. Ink composition according to claim 1, characterized in that the resin a) is chosen from among acrylic polyers or copolymers with one another or with other ethylenically unsaturated monomers.

15. Ink composition according to claim 9, characterized in that the resin b) is chosen from among modified or unmodified bisphenol epoxy-type resins.

16. Composition according to claim 1, characterized in that the weight ratio of the resin having hydroxyl or carboxyl functions to the epoxy resin is between 20:80 and 80:20.

17. Composition according to claim 1, characterized in that it comprises 0.5 to 10 wt.% dye and/or pigment.

18. Process for the marking of objects, particularly nonporous objects, by projection onto said objects of an ink, characterized in that the projected ink is an ink composition according to any one of the claims 1 to 17.

19. Process according to claim 18, characterized in that marking takes place by the continuous jet method.

20. Substrate, particularly nonporous substrate, characterized in that it is provided with a marking incorporating the ink composition according to any one of the claims 1 to 17.

21. Substrate according to claim 20, characterized in that the substrate is of metal, plastics material, paper, ceramic, Plexiglas, wood or any other nonporous material.

22. Substrate according to claim 21, characterized in that it is constituted by a glass bottle.

## Patentansprüche

1. Tintenzusammensetzung zur Markierung von Gegenständen, frei von Initiatoren der UV-Polymerisation und mindestens:
- einen Farbstoff und/oder ein Pigment,
- ein organisches Lösungsmittel
- und ein Bindemittel
enthaltend, dadurch gekennzeichnet, daß das Bindemittel die Kombination von zumindest:
a) einem Polymerharz mit Hydroxyl- oder Carboxylfunktionen, das unter den Vinylharzen und den Acrylharzen gewählt ist, und
b) einem flüssigen hydrophoben Polymerharz vom Epoxytyp, das eine weichmachende Wirkung hat,
enthält.

2. Tintenzusammensetzung nach Anspruch 1, dadurch gekennzeichnet, daß das Bindemittel ferner ein weiteres Harz enthält, das von den Harzen a) und b) verschieden ist.

3. Tintenzusammensetzung nach Anspruch 1, dadurch gekennzeichnet, daß sie ferner ein Leitfähigkeitssalz enthält.

4. Tintenzusammensetzung nach Anspruch 1, dadurch gekennzeichnet, daß sie ein Additiv enthält ist, das gewählt ist unter einem Schaumverhüter, einem chemischen Stabilisator, einem UV-Stabilisator, allein oder in Kombination verwendet.

5. Tintenzusammensetzung nach Anspruch 1, dadurch gekennzeichnet, daß der Farbstoff unter den Lösungsmittelfarbstoffen: "Solvent dyes", den Pigmenten und den Grundfarbstoffen: "Basic dyes" gewählt ist.

6. Tintenzusammensetzung nach Anspruch 1, dadurch gekennzeichnet, daß das organische Lösungsmittel unter den Alkoholen, den Ketonen, den Estern und den aromatischen Kohlenwasserstoffen gewählt ist, allein oder in Mischung verwendet und gegebenenfalls mit einem oder mehreren weniger flüchtigen organischen Lösungsmitteln versetzt.

7. Tintenzusammensetzung nach Anspruch 1, dadurch gekennzeichnet, daß das Polymerharz a) ein Harz mit Hydroxylfunktionen ist, das eine Hydroxylzahl von 30 bis 100 hat.

8. Tintenzusammensetzung nach Anspruch 1, dadurch gekennzeichnet, daß das Polymerharz a) ein Harz mit Carboxylfunktionen ist, das eine Säurezahl zwischen 40 und 300 hat.

9. Tintenzusammensetzung nach Anspruch 1, dadurch gekennzeichnet, daß das Harz b) ein Harz vom Epoxytyp ist, das einen Epoxygehalt zwischen 1000 und 6000 mmol/kg hat.

10. Tintenzusammensetzung nach Anspruch 2, dadurch gekennzeichnet, daß das zusätzliche Harz unter den Ketonharzen, den Aldehydharzen, Kolophonium und den Kolophoniumderivaten gewählt ist, allein oder in Mischung verwendet.

11. Tintenzusammensetzung nach Anspruch 3, dadurch gekennzeichnet, daß das Leitfähigkeitssalz unter den Halogeniden, Perchloraten, Nitraten, Thiocyanaten, Acetaten, Propionaten, Sulfaten von Alkali- oder Erdalkalimetallen oder von einfachem oder quartärem Ammonium gewählt ist.

12. Tintenzusammensetzung nach Anspruch 6, dadurch gekennzeichnet, daß das Lösungsmittel Methylethylketon ist.

13. Tintenzusammensetzung nach Anspruch 1, dadurch gekennzeichnet, daß das Harz a) unter den Copolymeren von Vinylchlorid und Vinylacetat gewählt ist.

14. Tintenzusammensetzung nach Anspruch 1, dadurch gekennzeichnet, daß das Harz a) unter den reinen Acryl-Polymeren oder -Copolymeren oder den Acryl-Copolymeren mit anderen ethylenisch ungesättigten Monomeren gewählt ist.

15. Tintenzusammensetzung nach Anspruch 9, dadurch gekennzeichnet, daß das Harz b) unter den modifizierten oder nicht modifizierten Harzen vom Typ Epoxy-Bisphenol gewählt ist.

16. Zusammensetzung nach Anspruch 1, dadurch gekennzeichnet, daß das Massenverhältnis des Harzes mit Hydroxyl- oder Carboxylfunktionen zum Epoxyharz zwischen 20/80 und 80/20 liegt.

17. Zusammensetzung nach Anspruch 1, dadurch gekennzeichnet, daß sie 0,5 bis 10 Massen-% Farbstoff und/oder Pigment enthält.

18. Verfahren zur Markierung von Gegenständen, insbesondere von nicht porösen Gegenständen, durch Spritzen einer Tinte auf diese Gegenstände, dadurch gekennzeichnet, daß die gespritzte Tinte eine Tintenzusammensetzung nach einem der Ansprüche 1 bis 17 ist.

19. Verfahren nach Anspruch 18, dadurch gekennzeichnet, daß die Markierung durch die Technik des kontinuierlichen Strahls ausgeführt wird.

20. Substrat, insbesondere nicht poröses Substrat, dadurch gekennzeichnet, daß es mit einer Markierung versehen ist, die die Tintenzusammensetzung nach einem der Ansprüche 1 bis 17 enthält.

21. Substrat nach Anspruch 20, dadurch gekennzeichnet, daß das Substrat Metall, Plastikmaterial, Papier, Keramik, Plexiglas, Holz oder jedes andere nicht poröse Material ist.

22. Substrat nach Anspruch 21, dadurch gekennzeichnet, daß es aus einer Glasflasche besteht.
